# EUROPÄISCHE PATENTSCHRIFT

(11) **EP 0 899 223 B1**
(45) Veröffentlichungstag und Bekanntmachung des Hinweises auf die Patenterteilung: **27.11.2002**
(21) Anmeldenummer: 98114336.5
(22) Anmeldetag: 30.07.1998
(51) Int. Cl.: B65G 53/46

(54) **Zellenradschleuse zum Dosieren von Schüttgut**
Cellular-wheel lock for dosing bulk material
Ecluse à roue cellulaire pour le dosage de matières en vrac

(30) Priorität: 01.09.1997 DE 19738122
(43) Veröffentlichungstag der Anmeldung: 03.03.1999
(73) Patentinhaber: Coperion Waeschle GmbH & Co. KG, 88250 Weingarten (DE)
(72) Erfinder: Metzler, Eugen, 88370 Ebenweiler (DE)
(74) Vertreter: Prietsch, Reiner, Dipl.-Ing.

(56) Entgegenhaltungen:
- EP-A- 0 586 728
- DE-A- 3 339 061
- DE-A- 3 521 194
- DE-A- 4 019 627
- DE-C- 3 742 522
- WOLFGANG TIETZE (HRSG.): "Handbuch dichtungspraxis", 1998, VULKAN-VERLAG, ESSEN

## Beschreibung

Die Erfindung betrifft eine Zellenradschleuse zum Dosieren von Schüttgut, mit den im Oberbegriff des Anspruches 1 angegebenen Merkmalen.

Aus der DE 37 42 521 C1 ist eine Zellenradschleuse bekannt, deren Gehäuse zwei Seitendeckel mit Lagern für die Welle des Seitenscheiben aufweisenden Zellenrades hat. Damit diese Schleuse auch bei hohen Druckdifferenzen zwischen der Einlauf- und der Auslaufseite betrieben werden kann, ist sie mit einer aufwendigen Dichtungsanordnung ausgestattet. Die Lager für die Zellenradwelle befinden sich außen in den Seitendeckln und sind in Richtung des Schleuseninnenraums durch eine Anzahl von auf der Welle sitzenden Wellendichtungen gegen das Eindringen von insbesondere staubförmigen Schüttgutpartikeln geschützt. Diese Anordnung baut vergleichsweise breit, so daß die Zellenradwelle bei hohen Druckdifferenzen entweder eine Durchbiegung erfährt, die das betriebsmäßige Spiel auf der einen Seite vergrößert und auf der anderen Seite verkleinert, oder sehr massiv und damit biegesteif ausgeführt werden muß. Während die letztere Maßnahme ersichtlich fertigungs- und damit kostenintensiv ist, führt eine Durchbiegung der Zellenradwelle unvermeidbar zu erhöhter Reibung und damit Erwärmung sowohl im Umfangsbereich des Zellenrades als auch im Bereich der Welle und der Wellendichtungen.

Aus der DE 40 19 627 A1 ist eine Zellenradschleuse mit den im Oberbegriff des Anspruches 1 genannten Merkmalen bekannt. Die Wellendichtungen schützen die Lager gegen Schüttgutpartikel. Die Zellenradschleuse hat aber eine verhältnismäßig lange Zellenradwelle, so daß sich letztere bei Druckdifferenzen durchbiegt, wodurch sich das betriebsmäßige Spiel auf der einen Seite vergrößert und auf der anderen Seite verkleinert.

Aus der EP-A-0 586 728 ist eine weitere Zellenradschleuse mit den Merkmalen des Oberbegriff des Anspruches 1 bekannt. Diese Zellenradschleuse hat im Bereich des Lagers Anschlüsse zu dessen Schmierung.

Auch aus der DE 33 39 061 A1 ist eine derartige Zellenradschleuse bekannt. Das Zellenrad ist axial durch Bordwände unterteilt. Die dadurch gebildeten, seitlichen Kammern dienen zum Abführen von übertretendem Schüttgut und damit zum Schutz der Wellenlager. Die Lager sind allerdings zur Umgebung offen und daher nicht mit Sperrgas beaufschlagbar.

Der Erfindung liegt die Aufgabe zugrunde, eine Zellenradschleuse mit den im Oberbegriff des Anspruches 1 genannten Merkmalen, jedoch einem verbesserten Schutz der Lager gegen das Eindringen von Schüttgutpartikeln und anderen Verunreinigungen zu schaffen.

Diese Aufgabe ist erfindungsgemäß durch Ausstattung der Zellenradschleuse mit den im Kennzeichen des Anspruches 1 angegebenen Merkmalen gelöst.

Über den Sperrfluidanschluß kann ein Sperrgas oder eine Sperrflüssigkeit zugeführt werden, die das Eindringen von Schüttgutpartikeln in das Lager verhindert. Über den Sperrgasanschluß zugeführtes Fluid verhindert wiederum, daß das über den Sperrfluidanschluß eingeleitete Medium z.B. während des Anfahrens oder Stillsetzens der Schleuse Schmiermittel aus dem Lagern in den Gehäuseinnenraum trägt. Die Verbindung des Sperrfluidanschlusses mit dem Sperrgasanschluß über ein Filter verhindert ihrerseits, daß bei einer Richtungsumkehr der Fluidströmung, wie sie insbesondere beim Anfahren, beim Stillsetzen oder bei einer Betriebsstörung der Schleuse oder des Fördervorganges eintreten kann, beispielsweise Schmiermittel aus dem Lager über dessen Sperrfluidanschluß, den gemeinsamen Anschluß an die Sperrgasquelle und den in den Innenraum mündenden Sperrgasanschluß in die Schleuse gelangen kann.

Zwischen mindestens einer der Seitenscheiben und dem gleichseitigen Lager kann sich mindestens eine dritte Wellendichtung befinden (Anspruch 2).

Diese Wellendichtung braucht dann auch bei hohem Differenzdruck zwischen dem Gehäuseinnenraum und der Umgebung nur eine geringe Differenzdruckfestigkeit aufzuweisen, da die jenseits des betreffenden Lagers außen angeordnete Wellendichtung, gegebenenfalls unterstützt durch eine Sperrgaszufuhr, den größten Teil des Differenzdruckes aufnimmt.

Der Sperrfluidanschluß und der Sperrgasanschluß können an getrennte Quellen angeschlossen, jedoch über eine mediumstrennende Druckausgleichsvorrichtung miteinander verbunden sein (Anspruch 3).

Die Druckausgleichsvorrichtung kann ein in einem Zylinder verschiebbarer Kolben (Anspruch 4), ein durch eine elastische Membran geteiltes Druckausgleichsgefäß (Anspruch 5) oder ein durch eine elastische Blase geteiltes Druckausgleichsgefäß (Anspruch 6) sein.

Wie bereits erwähnt, hat der Vorschlag nach der Erfindung u.a. den Vorteil, nahezu beliebige, im erforderlichen Maß druckdifferenzfeste Wellendichtungen einsetzen zu können. In diesem Sinne kann die mindestens eine Wellendichtung eine Gleitringdichtung sein, in die ein weiterer Sperrfluidanschluß mündet (Anspruch 7). Als Sperrfluid wird für solche an sich bekannten Gleitringdichtungen meist ein flüssiges Medium eingesetzt.

Stattdessen können sich, von dem Gehäuseinnenraum gesehen, mindestens zwei konventionelle Wellendichtungen jenseits des zugehörigen gleichseitigen Lagers befinden, wobei dann in den Raum zwischen den beiden Wellendichtungen ein weiterer Sperrgasanschluß mündet (Anspruch 8), über den das Sperrgas mit einem Druck zugeführt wird, der einen Abbau des Drucks im Gehäuseinnenraum auf den Umgebungsdruck in vorgegebenen, z.B. gleichen Druckstufen, gewährleistet, so daß beide Wellendichtungen lediglich für den halben Differenzdruck ausgelegt zu sein brauchen.

Um das oder die Lager und, sofern vorhanden, die jeweilige dritte Wellendichtung zwischen dem Lager und der gleichseitigen Seitenscheibe noch besser gegen das Eindringen von Schüttgutpartikeln zu schützen, kann sich zwischen den Umfängen der Seitenscheiben und der Gehäuseinnenwand eine die entsprechenden Ringspalte abdichtende Ringdichtung befinden. Hierfür sind verschiedene Lösungen im Stand der Technik bekannt.

In der Zeichnung ist die Zellenradschleuse nach der Erfindung in mehreren Ausführungsbeispielen schematisch vereinfacht dargestellt. Es zeigt:
- Fig. 1: eine erste Ausführungsform im Längsschnitt
- Fig. 2: eine zweite Ausführungsform im Längsschnitt
- Fig. 3 bis 7: unterschiedliche Weiterbildungen der zweiten Ausführungsform im Ausschnitt und
- Fig. 8: eine dritte Ausführungsform im Längsschnitt.

Die in den Zeichnungen dargestellten Zellenradschleusen bestehen jeweils aus einem Gehäuse 1 mit zylindrischen Innenraum 2, einer oberseitigen Einlauföffnung 3 und einer unterseitigen Auslauföffnung 4. Das Gehäuse 1 ist mit Seitendeckeln 5a und 5b verschlossen auf denen Lagerdeckel 6a und 6b sitzen. In den Seitendeckeln befinden sich Lager 7a und 7b für eine Welle 8 mit Zellenradstegen 9, die sich zwischen Seitenscheiben 10a und 10b erstrecken. Die Lager 7a und 7b befinden sich in den Seitendeckeln möglichst nahe an den Seitenscheiben 10a und 10b, damit die Welle 8 zwischen den Lagern möglichst kurz gehalten werden kann, um auch bei großen Druckdifferenzen zwischen der Einlauf- und/oder der Auslauföffnung und/oder der Umgebung die Durchbiegung der Welle 8 gering zu halten.

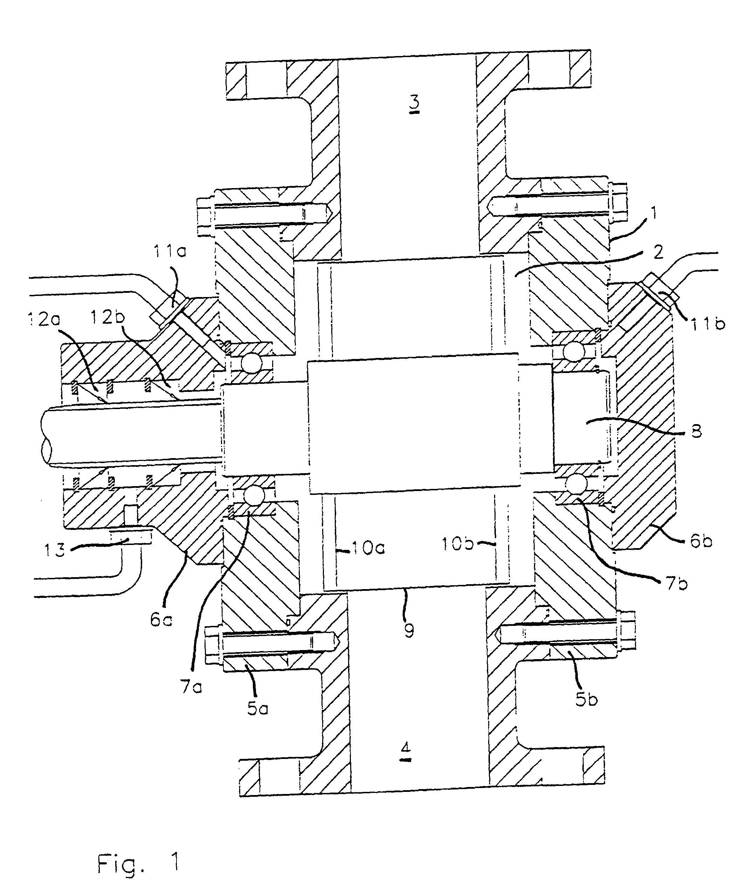

In der Ausführungsform nach Figur 1 mündet in den Bereich der Lager 7a und 7b je ein Sperrfluidanschluß 11a und 11b.

Vom Gehäuseinnenraum 2 gesehen, befinden sich jenseits des Lagers 7a zwei Wellendichtungen 12a, 12b, zwischen denen ein Sperrfluidanschluß, hier ein Sperrgasanschluß 13, mündet. Das über die Sperrfluidanschlüsse 11a, 11b in die Lager eingeleitete Fluid, in der Regel bei dieser Ausführungsform ein Gas, wird mit einem Druck zugeführt, der etwa gleich dem höchsten in der Schleuse herrschenden Druck ist. Das über den Sperrgasanschluß 13 den Wellendichtungen zugeführte Sperrgas kann hingegen einen Druck etwa gleich der Hälfte des Druckunterschiedes zwischen dem Gehäuseinnenraum 2 und der Umgebung haben. In diesem Fall werden die Wellendichtungen 12a, 12b jeweils nur mit der Hälfte des gesamten Differenzdruckes beansprucht.

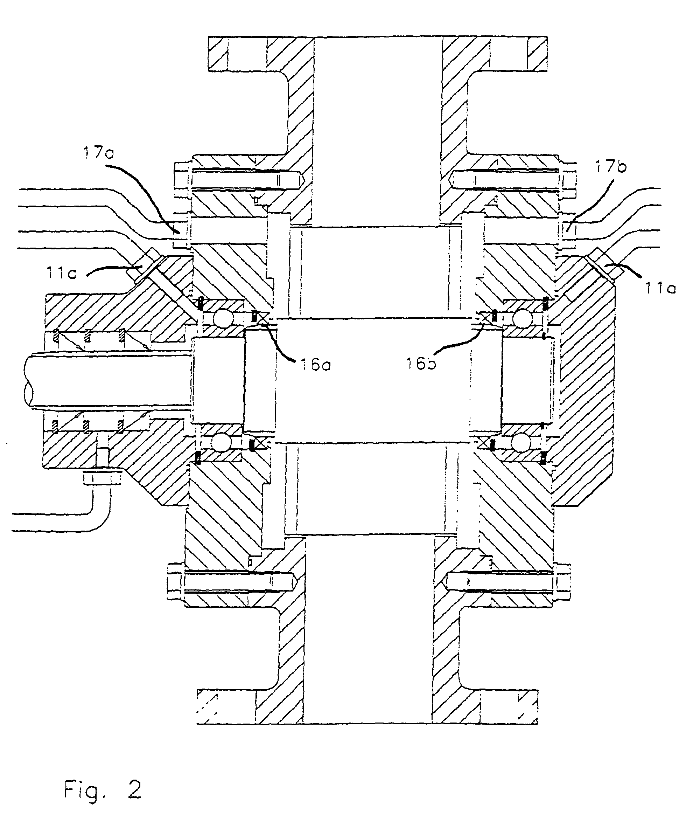

In der Ausführungsform gemäß Figur 2 befinden sich auf der Welle 8 zwischen dem Gehäuseinnenraum 2 und dem jeweiligen Lager 7a und 7b zusätzliche Wellendichtungen 16a und 16b. Außerdem mündet in den Gehäuseinnenraum 2 beidseits je ein Sperrgasanschluß 17a und 17b. Der Druck des zugeführten Sperrgases kann etwas höher als der Druck des über die Sperrfluidanschlüssella, 11b den Lagern 7a und 7b zugeführten Sperrfluids sein, das in diesem Fall eine Flüssigkeit, insbesondere ein Schmiermittel sein kann. Die zusätzlichen Wellendichtungen 16a, 16b können sehr schmal gehalten werden, weil sie nur einem geringen Differenzdruck ausgesetzt sind.

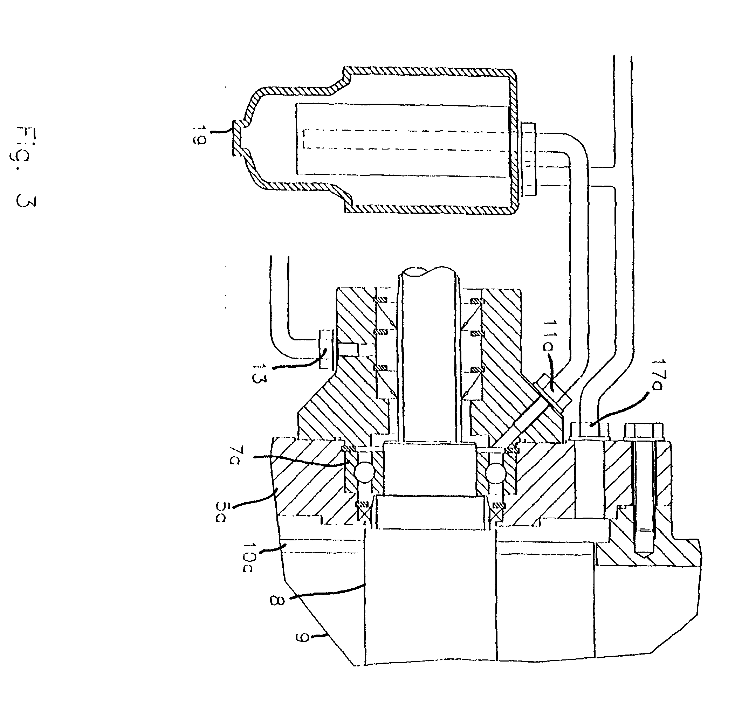

Figur 3 zeigt eine verbesserte Ausführungsform, bei der die Sperrgasanschlüsse 11a und 17a (sowie die nicht dargestellten, spiegelbildlichen Sperrgasanschlüsse) aus der gleichen Quelle gespeist werden, jedoch über ein nur schematisch dargestelltes Filter 19 miteinander verbunden sind, das dafür sorgt, daß bei einer unbeabsichtigten Umkehr der Strömungsrichtung in einem oder beiden Sperrgasanschlüssen 11a und 17a keine Schmiermittel oder Schüttgutpartikel von dem einen zu dem anderen Sperrgasanschluß gelangen können.

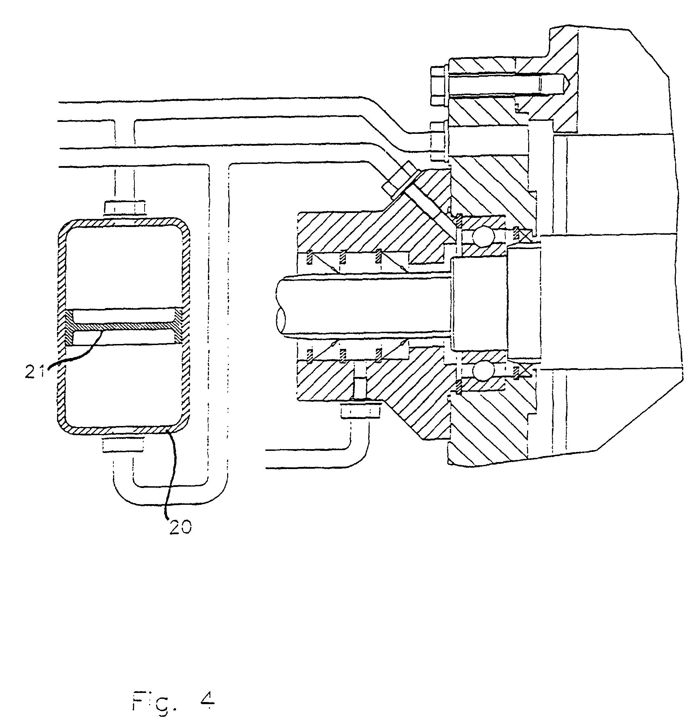

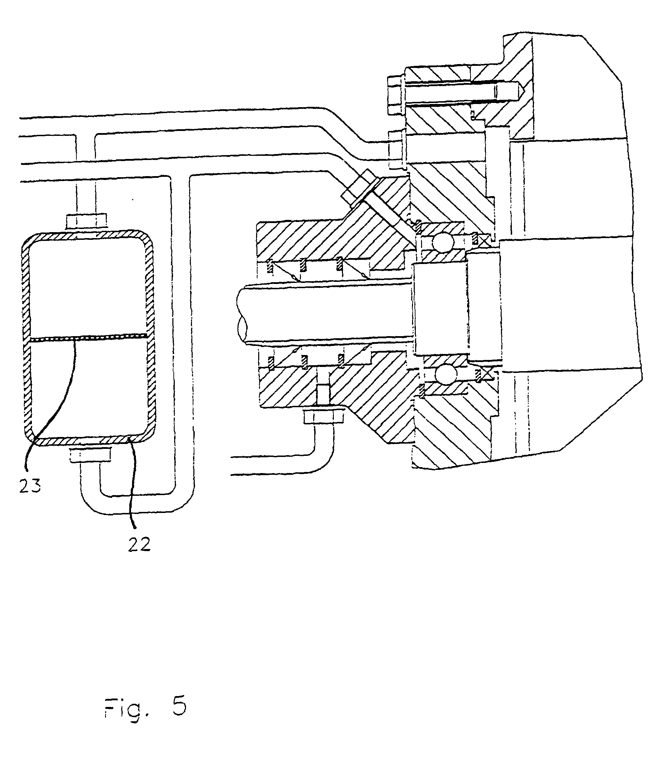

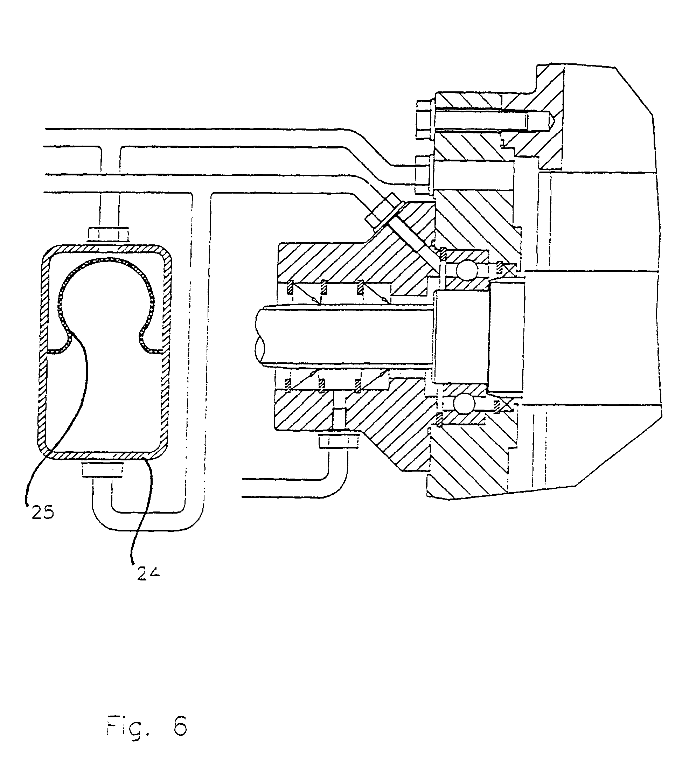

Wird hingegen z.B. das Lager 7a nicht mit einem Sperrgas sondern mit einem anderen Sperrmedium, z.B. einem Schmiermittel, versorgt, so tritt an die Stelle des Filters 19 in Figur 3 eine druckübertragende jedoch mediumstrennende Vorrichtung, wie etwa ein Druckausgleichszylinder 20 mit einem darin verschieblich geführten Kolben 21 wie in Figur 4 dargestellt, oder ein Druckausgleichsbehälter 22 mit einer elastischen Membran 23, wie in Figur 5 dargestellt, oder schließlich auch ein Druckausgleichsbehälter 24, mit einer flexiblen Blase 25, wie in Figur 6 dargestellt.

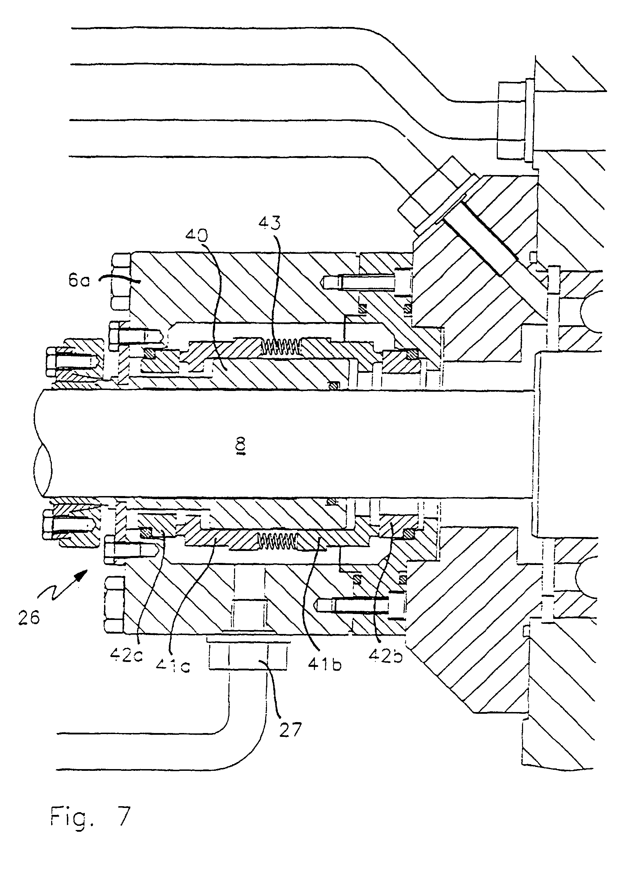

Figur 7 zeigt eine bevorzugte Ausführungsform, in der die Wellendichtung für den aus dem Gehäuse herausgeführten Teil der Welle 8 aus einer insgesamt mit 26 bezeichneten Gleitringdichtung besteht, die über den Sperrfluidanschluß 27 mit einem Schmiermittel versorgt wird.

Die Gleitringdichtung 26 besteht im wesentlichen aus einem drehfest mit der Welle 8 verbundenen Grundkörper 40, auf dem ebenfalls drehfest zwei axial verschiebbare Gleitringe 41a, 41b angeordnet sind, die über Federn 43 auf korrespondierende, statisch im Lagerdeckel 6a montierte Gleitringe 42a, 42b gepreßt werden.

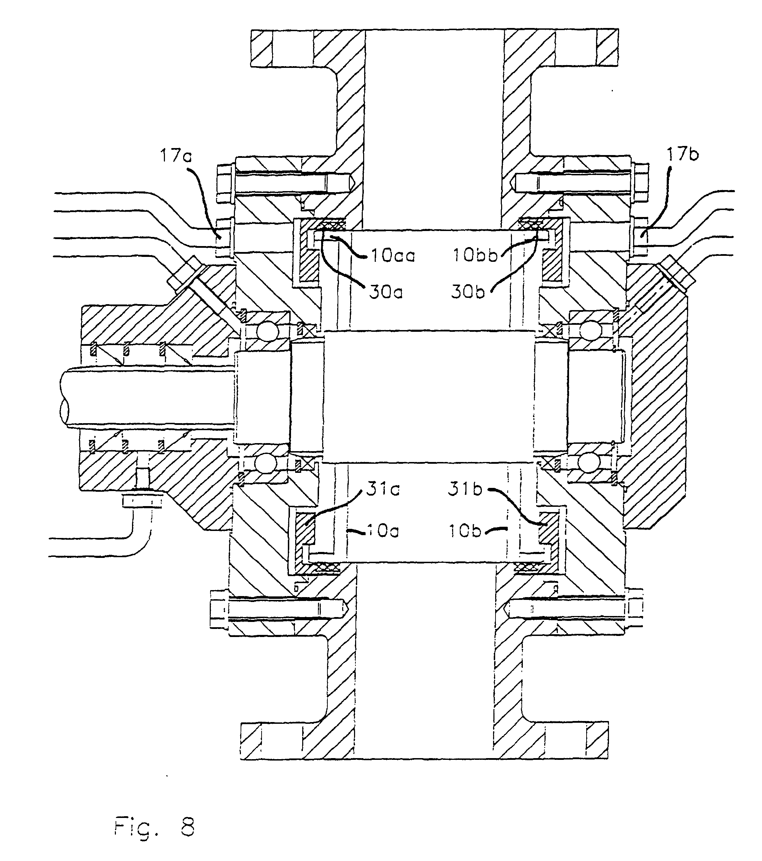

Figur 8 zeigt eine dritte Ausführungsform, die sich von derjenigen beispielsweise nach Figur 2 dadurch unterscheidet, daß sich zwischen den in axialer Richtung verbreiterten Umfängen 10aa bzw. 10bb der Seitenscheiben 10a und 10b und der Gehäuseinnenwand mehrere Ringdichtungen 30a, 30b befinden, die über stillstehende Druckscheiben 31a, 31b in axialer Richtung stoffbüchsenartig komprimiert werden und dadurch radial expandieren. Die Druckscheiben 31a, 31b sind mittels eines über die Anschlüsse 17a und 17b zugeführten Sperrfluides, vorzugsweise eines Sperrgases, druckbeaufschlagt.

## Patentansprüche

1. Zellenradschleuse zum Dosieren von Schüttgut, bestehend aus einem Gehäuse (1) mit einer oberseitigen Einlauföffnung (3), einer unterseitigen Auslauföffnung (4) und zwei Seitendeckeln (5a, 5b) mit Lagern (7a, 7b) für die Welle (8) eines Seitenscheiben (10a, 10b) aufweisenden Zellenrades sowie mit Wellendichtungen zur Abdichtung des Gehäuseinnernraum (2) gegenüber der Umgebung, wobei sich mindestens eine der Wellendichtungen (12a, 12b) von dem Gehäuseinnenraum (2) gesehen, jenseits des zugehörigen, gleichseitigen Lagers (7a) befindet, **dadurch gekennzeichnet, daß** im Bereich des Lagers (7a, 7b) ein Sperrfluidanschluß (11a, 11b) mündet, daß mindestens in den Raum zwischen einer der Seitenscheiben (10a, 10b) und dem gleichseitigen Seitendeckel (5a, 5b) ein Sperrgasanschluß (17a, 17b) mündet und daß der Sperrfluidanschluß (11a) über ein Filter (19) mit dem Sperrgasanschluß (17a) verbunden ist.

2. Zellenradschleuse nach Anspruch 1, **dadurch gekennzeichnet, daß** sich zwischen mindestens einer der Seitenscheiben (10a, 10b) und dem gleichseitigen Lager (7a, 7b) mindestens eine dritte Wellendichtung (16a, 16b) befindet.

3. Zellenradschleuse nach Anspruch 1 oder 2, **dadurch gekennzeichnet, daß** der Sperrfluidanschluß (11a) und der Sperrgasanschluß (17a) an getrennte Quellen angeschlossen, jedoch über eine Druckausgleichsvorrichtung (20 bis 26) miteinander verbunden sind.

4. Zellenradschleuse nach Anspruch 3, **dadurch gekennzeichnet, daß** die Druckausgleichsvorrichtung ein in einem Zylinder (20) verschiebbarer Kolben (21) ist.

5. Zellenradschleuse nach Anspruch 3, **dadurch gekennzeichnet, daß** die Druckausgleichsvorrichtung ein durch eine elastische Membran (23) geteiltes Druckausgleichsgefäß (22) ist.

6. Zellenradschleuse nach Anspruch 3, **dadurch gekennzeichnet, daß** die Druckausgleichsvorrichtung ein durch eine flexible Blase (25) geteiltes Druckausgleichsgefäß (24) ist.

7. Zellenradschleuse nach einem der Ansprüche 1 bis 6, **dadurch gekennzeichnet, daß** die mindestens eine Wellendichtung eine Gleitringdichtung (26) ist, in die ein Sperrfluidanschluß (27) mündet.

8. Zellenradschleuse nach einem der Ansprüche 1 bis 7, **dadurch gekennzeichnet, daß** sich, von dem Gehäuseinnenraum (2) gesehen, mindestens zwei Wellendichtungen (12a, 12b) jenseits des zugehörigen gleichseitigen Lagers (7a) befinden, und daß in den Raum zwischen den beiden Wellendichtungen ein weiterer Sperrgasanschluß (13) mündet.

9. Zellenradschleuse nach einem der Ansprüche 1 bis 8, **dadurch gekennzeichnet, daß** sich zwischen den Umfängen der Seitenscheiben (10a, 10b) und der Gehäuseinnenwand eine die entsprechenden Ringspalte abdichtende Ringdichtung (10a, 10b) befindet.

## Claims

1. A cell wheel feeder for metering bulk material, comprising a housing (1) with an intake opening (3) at its top side, a discharge opening (4) at its bottom side, and two side covers (5a, 5b) with bearings (7a, 7b) for the shaft (8) of a cell wheel having side plates (10a, 10b) and with shaft seals for sealing off the internal space (2) of the housing with respect to the environment, wherein at least one of the shaft seals (12a, 12b), seen from the internal space (2) of the housing, is beyond the associated bearing (7a) on the same side, **characterised in that** a sealing fluid connection (11a, 11b) opens in the region of the bearing (7a, 7b), that a sealing gas connection (17a, 17b) opens at least into the space between one of the side plates (10a, 10b) and the side cover (5a, 5b) on the same side and that the sealing fluid connection (11a) is connected to the sealing gas connection (17a) by way of a filter (19).

2. A cell wheel feeder according to claim 1 **characterised in that** at least one third shaft seal (16a, 16b) is disposed between at least one of the side plates (10a, 10b) and the bearing (7a, 7b) at the same side.

3. A cell wheel feeder according to claim 1 or claim 2 **characterised in that** the sealing fluid connection (11a) and the sealing gas connection (17a) are connected to separate sources but are connected together by way of a pressure equalisation device (20 to 26).

4. A cell wheel feeder according to claim 3 **characterised in that** the pressure equalisation device is a piston (21) displaceable in a cylinder (20).

5. A cell wheel feeder according to claim 3 **characterised in that** the pressure equalisation device is a pressure equalisation vessel (22) divided by an elastic diaphragm (23).

6. A cell wheel feeder according to claim 3 **characterised in that** the pressure equalisation device is a pressure equalisation vessel (24) divided by a flexible bladder (25).

7. A cell wheel feeder according to one of claims 1 to 6 **characterised in that** the at least one shaft seal is a sliding ring seal (26) into which a sealing fluid connection (27) opens.

8. A cell wheel feeder according to one of claims 1 to 7 **characterised in that**, viewed from the internal space (2) of the housing, at least two shaft seals (12a, 12b) are disposed beyond the associated bearing (7a) on the same side, and that a further sealing gas connection (13) opens into the space between the two shaft seals.

9. A cell wheel feeder according to one of claims 1 to 8 **characterised in that** disposed between the peripheries of the side plates (10a, 10b) and the inside wall of the housing is a ring seal (10a, 10b) which seals off the corresponding annular gaps.

## Revendications

1. Ecluse à roue cellulaire pour le dosage de matières en vrac, composée d'une carcasse (1) avec un orifice d'entrée (3) situé en haut, un orifice de sortie (4) situé en bas et deux chapeaux latéraux (5a, 5b) comprenant des paliers (7a, 7b) pour l'arbre (8) d'une roue cellulaire présentant des flasques (10a, 10b) ainsi que des garnitures d'arbre étanches pour rendre étanche l'intérieur (2) de la carcasse, l'une au moins des garnitures d'arbre étanches (12a, 12b) se trouvant de l'autre côté, vu de l'intérieur (2) de la carcasse, par rapport au palier (7a) correspondant situé du même coté, **caractérisée en ce qu'**un raccord de fluide d'arrêt (11a, 11b) débouche dans la zone du palier (7a, 7b), **en ce qu'**un raccord de gaz d'arrêt (17a, 17b) débouche au moins dans l'espace entre l'un des flasques (10a, 10b) et le chapeau latéral (5a, 5b) situé du même côté, et **en ce que** le raccord de fluide d'arrêt (11a) est relié au raccord de gaz d'arrêt (17a) par l'intermédiaire d'un filtre (19).

2. Ecluse à roue cellulaire selon la revendication 1, **caractérisée en ce qu'**au moins une troisième garniture d'arbre étanche (16a, 16b) se trouve entre l'un au moins des flasques (10a, 10b) et le palier (7a, 7b) situé du même côté.

3. Ecluse à roue cellulaire selon la revendication 1 ou la revendication 2, **caractérisée en ce que** le raccord de fluide d'arrêt (11a) et le raccord de gaz d'arrêt (17a) sont raccordés à des sources séparées mais sont reliés entre eux par l'intermédiaire d'un dispositif d'équilibrage de pression (20 à 26).

4. Ecluse à roue cellulaire selon la revendication 3, **caractérisée en ce que** le dispositif d'équilibrage de pression est un piston (21) qui peut se déplacer dans un cylindre (20).

5. Ecluse à roue cellulaire selon la revendication 3, **caractérisée en ce que** le dispositif d'équilibrage de pression est un vase d'équilibrage de pression (22) divisé par une membrane élastique (23).

6. Ecluse à roue cellulaire selon la revendication 3, **caractérisée en ce que** le dispositif d'équilibrage de pression est un vase d'équilibrage de pression (24) divisé par une poche flexible (25).

7. Ecluse à roue cellulaire selon l'une des revendications 1 à 6, **caractérisée en ce que** la garniture d'arbre étanche au nombre de un au moins est une garniture étanche à anneau glissant (26) dans laquelle débouche un raccord de fluide d'arrêt (27).

8. Ecluse à roue cellulaire selon l'une des revendications 1 à 7, **caractérisée en ce qu'**au moins deux garnitures d'arbre étanches (12a, 12b) se trouvent de l'autre côté, vu de l'intérieur (2) de la carcasse, par rapport au palier (7a) correspondant situé du même côté et **en ce qu'**un autre raccord de gaz d'arrêt (13) débouche dans l'espace entre les deux garnitures d'arbre étanches.

9. Ecluse à roue cellulaire selon l'une des revendications 1 à 8, **caractérisée en ce qu'**un joint torique (10a, 10b) se trouve entre les circonférences des flasques (10a, 10b) et la paroi intérieure de la carcasse afin de rendre étanche l'espace annulaire correspondant.
